# EUROPEAN PATENT APPLICATION

(11) **EP 1 257 067 A2**
(43) Date of publication of application: **13.11.2002**
(21) Application number: 02009396.9
(22) Date of filing: 07.05.2002
(51) Int. Cl.: H04B 1/707

(54) **CDMA receiver and searcher used for the CDMA receiver**

(30) Priority: 08.05.2001 JP 2001137457
(71) Applicant: NEC CORPORATION, Tokyo (JP)
(72) Inventor: Sakuma, Emiko, NEC Corporation, Minato-ku, Tokyo (JP)
(74) Representative: VOSSIUS & PARTNER

(57) **Abstract**

In a CDMA receiver that has a searcher operable in response to a reception spread spectrum signal and a plurality of spread codes with delay times different from one another, the searcher has a search range setter that can vary a search range when no active communication path is detected within a search range. The search range can be successively expanded by a search range setter from a search range to a maximum one through an intermediate search range between the search and the maximum search range, when no active communication path is detected. Such an active communication path can be detected by monitoring appearance of the active communication path within the search range. Alternatively, absence of the active communication path may be detected by counting continuous absence of the active path within the search range for a preselected number of times.

## Description

This invention relates to a CDMA (Code Division Multiple Access) receiver and a searcher used for the CDMA receiver.

In a CDMA communication system, a CDMA receiver receives a spread spectrum signal transmitted from a CDMA transmitter. The spread spectrum signal is generated by modulating a transmission data signal by a spread code and by further carrying out primary modulation, such as QPSK.

A conventional CDMA receiver of the type described is disclosed, for example, in Japanese Unexamined Patent Publication No.2000-324016 (will be called Reference 1). The disclosed CDMA receiver is operable in response to a sequence of reception data signals subjected to spread spectrum modulation and produces a sequence of decoded data signals. The illustrated CDMA receiver is structured by a finger processing portion, a searcher, an adder or combiner, and a decoder. Specifically, the finger processing portion is given the reception data signal sequence and has a plurality of fingers each of which executes a de-spreading operation of the reception data signal sequence at reception timing different from one another. As a result, de-spread signals are sent from the fingers to the adder so as to combine them and are given as a combined data signal to the decoder. The decoder serves to produce the decoded data signal sequence.

On the other hand, the searcher has a plurality of correlators which are operable in response to the reception data signal sequence and reception timing signals somewhat shifted in timing from one another. Despreading operation is carried out by calculating each correlation between the reception data signal sequence and each reception timing signal to obtain correlation values. The correlation values are delivered to a plurality of adder units each of which successively sums up each of the correlation values. Each summed correlation signal is sent to an effective path detector to find an effective or a valid path. The effective path detector produces a peak timing signal representative of peak timing and a peak level signal representative of a peak level. The peak timing signal is produced at each path and delivered to each of the fingers and a search window offset controller while the peak level signal is also produced at each path and delivered to the search window offset controller.

In the searcher disclosed in Reference 1, the search window offset controller calculates a search window offset quantity from the peak timing and the peak level with reference to threshold levels. The search window offset quantity is sent to a search window delay circuit which is supplied with a spread code generated from a spread code generator. The search window delay circuit delays the spread code by the search window offset quantity to deliver a delayed spread code to a search delay circuit.

In the search delay circuit, the delayed spread code is delayed in consideration of the search window offset quantity to be produced as despreading codes which are somewhat shifted in timing. The despreading codes are sent to the correlators as the reception timing signals, as mentioned before.

With this structure, the search window can follow variation of the reception timing signals of the paths. In other words, search operation can be carried out by moving the search window within a maximum available range without increasing the correlators in number even when a long propagation delay might be caused to occur. The searcher might be effective when the paths are slowly shifted.

However, the searcher disclosed in Reference 1 never considers about rapid disappearance or extinction of any communication paths that may be caused to occur due to shadowing, fading, intersymbol interference, and the like.

In Japanese Unexamined Patent Publication No. Hei 11-298401, namely, 298401/1999(will be called Reference 2), disclosure is made about a synchronization processing device which controls a search width so that a path of a maximum reception power level is included in a multipath range. In addition, calculation is also made about path phases of paths that have reception power levels higher than a predetermined threshold level.

However, Reference 2 contemplates neither about rapid disappearance or extinction of any paths nor about recapturing any other paths after no detection of the paths.

It is an object of this invention to provide a CDMA receiver that is capable of coping with rapid loss of any communication paths.

It is another object of this invention to provide a searcher that is used in the CDMA receiver and that is capable of quickly recapturing any other paths even when the communication paths can not be rapidly detected by the CDMA receiver.

It is still another object of this invention to provide a method that is capable of quickly and effectively recapturing paths by reducing a possibility of detecting an invalid path.

A CDMA receiver to which this invention is applicable is operable in response to a spread spectrum signal subjected to spread spectrum modulation. According to a first aspect of this invention, the CDMA receiver comprises a searcher for searching a communication path by detecting a correlation between the spread spectrum signal and a spread code generated by the CDMA receiver. The searcher comprises detecting means for detecting whether or not the communication path is lost and search range expanding means for expanding a search range from a predetermined search range to a maximum search range through an intermediate search one that is wider than the predetermined search range and ant that is narrower than the maximum search range.

According to a second aspect of this invention, a searcher is for use in a CDMA receiver operable in response to a reception spread spectrum signal and comprises a spread code generator for generating a spread code, a delay unit for delaying the spread code to produce a plurality of delayed spread codes with different delay times, a correlator section, responsive to a reception spread spectrum signal and the plurality of the delayed spread codes given from the delay unit, for calculating each correlation between the reception spread spectrum signal and each delayed spread codes to obtain correlation values representative of the above-mentioned correlation, to detect a maximum one of the correlation values, and to produce a correlation output signal representative of a result of the detection, a path processing unit for processing the correlation output signal to produce a communication path candidate, a search range setting unit, responsive to the communication path candidate, for setting a search range so as to expand the search range, step by step, from a predetermined search range to a maximum search range through an intermediate search one that is wider than the predetermined search range and ant that is narrower than the maximum search range, to determine the search range, when any communication path is not detected by the path processing unit, and a delay time setter for setting the delay times to the delay unit on the basis of the search range determined by the search range expanding unit.

According to a third aspect of this invention, when the communication path is lost, the search range expanding unit widens the search range step by step from a previous one of the search ranges to the maximum search range by expanding the previous one of the search ranges on at least one of front and rear sides of the previous search range.

According to a fourth aspect of this invention, the search range setting unit judges that the communication path candidate is lost when no communication candidate path is detected within a current one of the search ranges or when no communication candidate path to repeatedly appear at the same time position plural times is continuously detected a predetermined number of times.

According to a fifth aspect of this invention, the search range expanding unit judges the communication candidate path as an active path when the communication candidate path repeatedly appears within the current one of the search ranges at the same time position the predetermined times.

According to a sixth aspect of this invention, the search range expanding unit stops expanding the current one of the search ranges when the active path is present within the current one of the search ranges while the search range expanding unit expands the current one of the search ranges when the active path does not continuously appear the predetermined times.

According to a seventh aspect of this invention, a path recapturing method is for use in recapturing a communication path in a CDMA receiver which has a searcher. The method comprises the steps of detecting correlation between a reception spread spectrum signal and a plurality of spread codes with different delay times by the use of a plurality of correlators to produce correlation output signals and searching the path with reference to the correlation output signals by stepwise expanding a search range from a current search range to a maximum one through an intermediate search range, when the communication path is not detected, so as to recapture a path.

According to an eighth aspect of this invention, the searching step comprises the step of stepwise adding, to the search range, a front side and/or a rear side of the search range by a predetermined range width, when the .

According to a ninth aspect of this invention, the searching step comprises the step of detecting that no communication path is present within the current search range or that none of the communication path continuously appears at the same delay time position a predetermined number of times and judging that no communication is present within the current search range.

According to a tenth aspect of this invention, the searching step comprises the steps of detecting whether or not a communication path continuously appear at the same delay time position for a predetermined duration within the search range and judging that the communication path is active on the above-mentioned continuous appearance of the communication path.

According to an eleventh aspect of this invention, the searching step comprising the steps of expanding the searching range when an active path is present during expansion of the search range, finishing the expansion of the search range on presence of the active path, counting the number of search operation times, and expanding the search range when the number of search operation times reaches a predetermined number of times without detection of any active path.

According to a twelfth aspect of this invention, the method comprises the steps of receiving a reception spread spectrum signal and a plurality of spread codes having different delay times by the searcher, detecting, within a search range, absence of any communication path when no communication path is detected or when no communication path continuously appears at the same delay time position a predetermined number of times, stepwise expanding the search range on a front side and a rear side of the search range by a predetermined width to a maximum delay range through an intermediate delay range on detection of the absence of any communication path, judging during expansion of the search range that a communication path is active when a communication path continuously appears at the same delay position for a preselected number of times within the search range, finishing the expansion of the search range when an active path is detected during the expansion of the search range, and carrying out a usual search without any expansion of the search range in the presence of the active path.

According to a thirteenth aspect of this invention, the stepwise expanding step comprises the step of expanding the search range when the search operation times is repeated the preselected number of times without detecting the active communication path.

### Brief Description of the Drawing:

Fig. 1 is a block diagram of a CDMA receiver to which this invention is applicable and which has a searcher according to this invention;
Fig. 2 is a block diagram of the searcher according to an embodiment of this invention;
Fig. 3 is a block diagram for use in describing a part of the searcher illustrated in Fig. 2 in detail;
Fig. 4 shows a flow chart for use in describing operation of the searcher according to this invention; and
Fig. 5 shows a graphical representation for use in describing a principle of this invention.

### Description of the Preferred Embodiments:

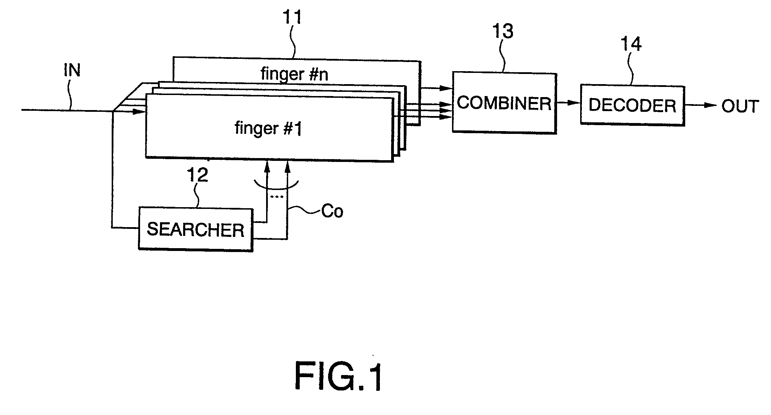

Referring to Fig. 1, description will be made about a CDMA receiver according to an embodiment of this invention. The illustrated CDMA receiver comprises a finger processing portion 11, a searcher 12, an adder or combiner 13, and a decoder 14. The finger processing portion 11 is given a sequence of reception data signals IN subjected to spread spectrum modulation by a transmitter (not shown). The finger processing portion 11 has first through n-th fingers #1 to #n each of which executes a de-spreading operation of the reception data signal sequence IN at reception timing different from one another. De-spread signals are sent from the fingers #1 to #n to the combiner 13 so as to be combined by the combiner 13 and are given as a combined data signal to the decoder 14. The decoder 14 produces a sequence of decoded data signals OUT.

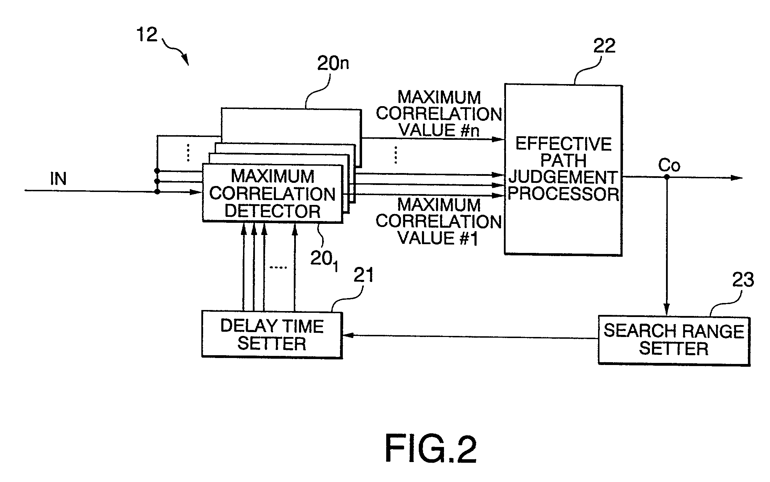

Referring to Fig. 2 together with Fig. 1, the illustrated searcher 12 has first through n-th maximum correlation detectors 201 to 20n which are operable in response to the reception data signal sequence IN and reception timing signals which are somewhat shifted in timing from one another and which are supplied from a delay time setter 21 in a manner to be described later. The maximum correlation detectors 201 to 20n may be collectively referred to as a correlator section. De-spreading operation is carried out in each maximum correlation detector 20 by calculating each correlation between the reception data signal sequence IN and each reception timing signal. At any rate, the first through the n-th maximum detectors 201 to 20n deliver maximum correlation values #1 to #n to an effective path judgement processor 22. The effective path judgement processor 22 calculates path candidates Co from the maximum correlation values and sends them to the finger processing portion 11 (Fig. 1) on one hand and to a search range setter 23 on the other hand.

The illustrated search range setter 23 is operable in a manner to be described later so as to expand a search range when current path or paths disappear or are lost due to shadowing, intersymbol interference, or the like.

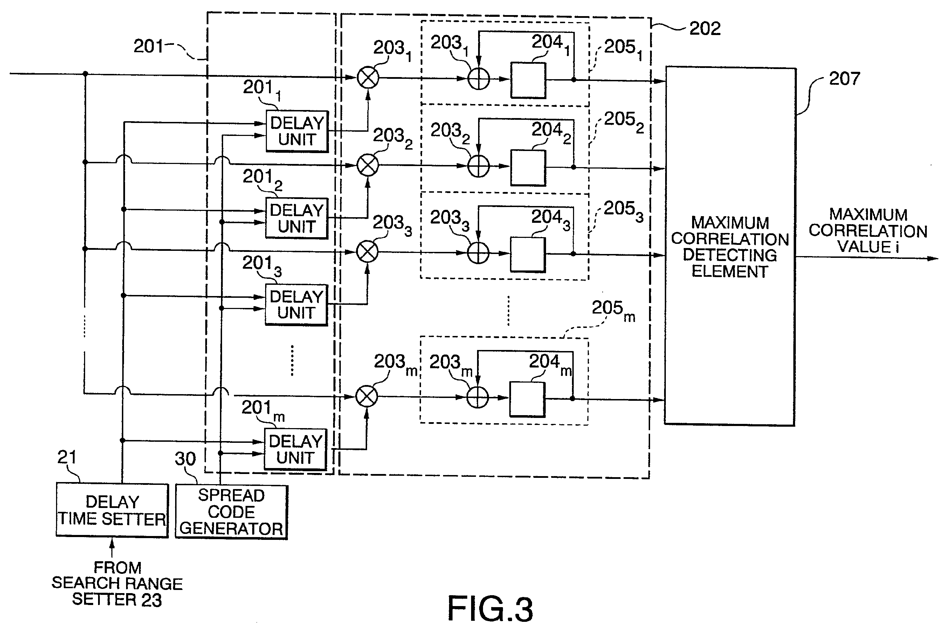

Referring to Fig. 3 also, each of the maximum correlation detectors 201 to 20n is connected to both the delay time setter 21 (Fig. 2) and a spread code generator 30. In Fig. 3, one of the maximum correlation detectors depicted by 20 (suffixes omitted) alone is illustrated as a representative of the maximum correlation detectors 201 to 20n and has a delay section 201, a correlator section 202, and a maximum correlation detecting element 207, together with the delay time setter 21 and the spread code generator 30 both of which serve as parts of the searcher 12.

As mentioned before, the delay time setter 21 is given delay time information that is sent from the search range setter 23 (Fig. 2) and that is effective to determine a search range in a manner to be described later in detail. The delay time setter 21 calculates delay times different from one another within the search range determined by the search range setter 21. In the illustrated example, the delay times may be called first through m-th delay times somewhat different from one another and are delivered from the delay time setter 21 to first through m-th delay units 201₁ to 201ₘ ,respectively. Furthermore, the first through the m-th delay units 201₁ to 201ₘ are given the spread code that may be peculiar to the CDMA receiver and calculates first through m-th correlation values between the spread code and the first through the m-th delay times. The first through the m-th correlation values are calculated in the form of first through m-th delayed spread codes and are sent to the correlator section 202.

The illustrated correlator section 202 has first through m-th multipliers 201₁ to 201ₘand first through m-th integrator 205₁ to 205ₘ. Each of the first through the m-th integrators is structured by an adder circuit 203 (suffix omitted) and a latch circuit 204 (suffix omitted also). Herein, it is to be noted that each combination of the adder circuit 203₁ to 203ₘ and the integrator 205₁ to 205ₘ forms a correlation unit.

In the correlator section 202, the first through the m-th multipliers 203₁ to 203ₘ multiply the reception data signal sequence IN by the first through the m-th correlation values, namely, delayed spread codes sent from the first through the m-th delay units 201₁ to 201ₘ to produce first through m-th products of the delayed spread codes and the reception data signal sequence IN. The first through the m-th products are successively integrated by the first through the m-th integrators 205₁ to 205ₘ to supply first through m-th correlation values of the reception data signal sequence IN to the maximum correlation detecting element 203. The maximum correlation detecting element 207 detects a maximum one of the correlation values.

In Fig. 3, the delay times given to the delayed spread code are restricted to the numbers of the delay units and the correlation units. As mentioned in Figs. 3, when each of the maximum correlation detectors 20₁ to 20ₙ has the delay units and the correlators each of which is equal in number to m, each of the maximum correlation detector 20₁ to 20ₙ can provide the delay time given by m x τ, where τ is representative of the delay time of each delay unit 201 and, as a result, the whole of the maximum correlation detectors 20₁ to 20n can provide a total delay time given by n x m x τ.

Referring back to Fig. 2, each maximum correlation value is sent from each maximum correlation detecting element 207 of the maximum correlation detectors 20₁ to 20ₙ to the effective path judgement processor 22. The effective path judgement processor 22 calculates path candidates Co from the respective maximum correlation values to send them to the search range setter 23 and the finger processing portion 11 (Fig. 1).

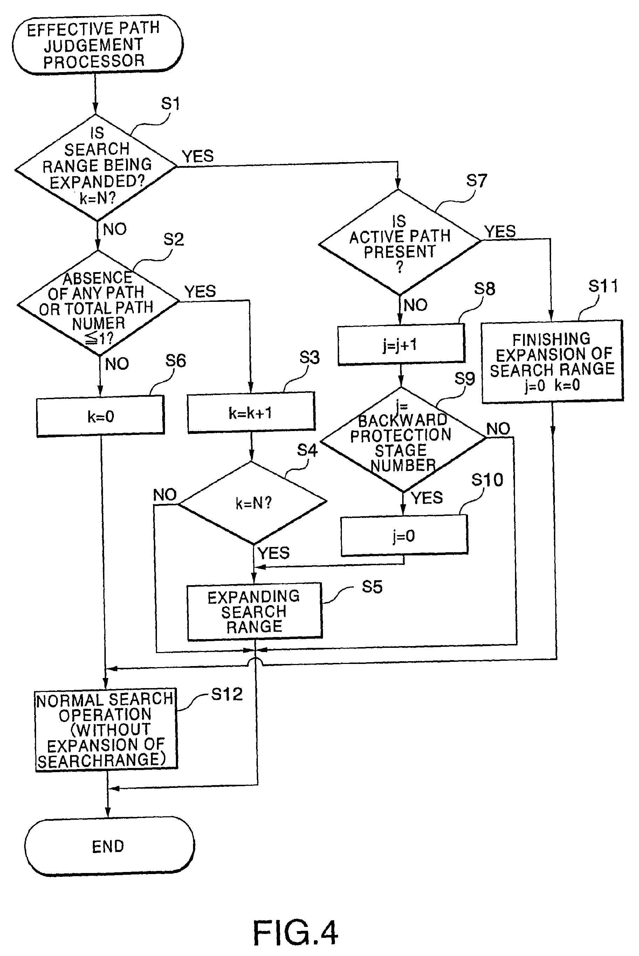

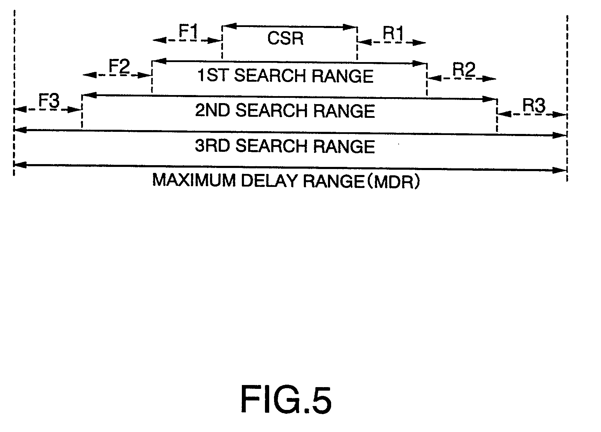

Referring to Figs. 4 and 5 along with Fig. 2, the search range setter 23 according to this invention will be described in detail and cooperates with the effective path judgement processor 22 illustrated in Fig. 2. At first, the search range setter 23 may be structured by a hardware circuit (for example, PLD (Programmable Logic Device)) or may be realized by hardware and software control. For example, the search range setter 23 can be readily structured by a processing unit for executing processing illustrated in Fig. 4, a plurality of counters for counting k, j, and n that will be described later, and a register for maintaining a backward protection stage number (will be mentioned later also). Alternatively, the processing illustrated in Fig. 4 and counter operations of the above-mentioned counters and the register may be executed under program control carried out by a controller and/or a processor.

Temporarily referring to Fig. 5,an abscissa and an ordinate represent a delay quantity, namely, a delay time and a correlation value, respectively. Description will be made with reference to Fig. 5 about a principle of the search range setter 23 according to the embodiment of this invention. In Fig. 5, it is assumed that the search range setter 23 has a maximum available delay range, namely, a maximum delay range MDR determined by a processing ability of the search range setter 23 and is operated within a current search range (CSR).

Under the circumstances, let any paths or communication paths rapidly disappear due to shadowing, fading, or the like. In other words, any paths are lost or extinct at all from the current search range (CSR) because the correlation values of all paths are lowered than a predetermined threshold level. In this event, a search range is expanded or widened from the current search range (CSR) towards both a front side F1 and a rear side R1 of the current search range (CSR) along the abscissa. As a result, the current search range (CSR) is expanded to a first search range as shown in Fig. 5. This shows that the search range setter 23 lengthens a delay time determined on the basis of the first search range. The searcher illustrated in Figs. 2 and 3 searches any paths within the first search range or within a lengthened delay time. In the illustrated example, each of the front and the rear sides F1 and R1 has a predetermined width or delay time.

Even in the first search range expanded from the current search range CSR, if no path is found by the searcher 12, the search range setter 23 further widens the first search range to a second search range by expanding the first search range towards both a further front side and a further rear one F2 and R2, as shown in Fig. 5. Thus, the first search range is expanded to a second search range. Each width of F2 and R2 may be equal to that of F1 and R1 or may be different from it.

If any paths are not found within the second search range, the search range setter 23 further expands the second search range to a third search range by adding front and rear sides F3 and R3 to the second search range, as illustrated in Fig. 5. In the illustrated example, the third search range is equal to the maximum delay range (MDR). From this fact, it is readily understood that the search range is expanded step by step from the current search range to the maximum delay range (MDR) through an intermediate search range or ranges, such as the first and the second search ranges. In addition, it is to be noted that the maximum delay range (MDR) is determined by the numbers of the delay units 201 and the maximum correlation detectors 20.

In the illustrated example, the searcher 12 illustrated in Figs. 2 and 3 searches paths by finding a delay time position at which the correlation values have high levels and, as a result, judges that such paths are active when such a delay time position is found.

Turning back to Fig. 4, the search range setter 23 is given candidate paths Co in the form of output signals sent from the effective path judgement processor 22. In Fig. 4, the search range setter 23 at first judges by the processor whether or not a search range is being expanded, namely, under expansion of the search range over a predetermined count N (step S1). To this end, judgement is made at the step S1 whether or not a count k is equal to N, where N is a positive integer. This shows that the search range can be expanded until the count k is equal to N. In other words, the search range can be widened N-count times. Such a count k may be counted by the counter or may be kept at a register.

If k is not equal to N, the search range setter 23 judges that the current search range can be expanded at the step S 1. In this event, the step S 1 is followed by a step S2 so as to judge whether any path is absent in the current search range or so as to judge whether or not a total path number is not greater than (namely, less than) 1, even if any path is present. The fact that the total path number is not greater than 1 shows that there is no path that repeatedly and continuously appears plural times at the same delay time position.

When absence of any path is judged or the total path number is less than 1, the step S2 is succeeded by a step S3 at which the count k is counted up by one into k+1. At a step S4, judgement is made about whether or not the count k is equal to N. When k =N, the step S4 is followed by a step S5 so as to expand the search range. This shows that judgement is made at the step S5 about judging no path during the count N or about judging that continuous detection of the total path number is less than 1 during the count N at the step S2. Thereafter, the current search range is expanded to the first search range shown in Fig. 5, at a step S5.

On the other hand, when the conditions mentioned in connection with the step S2 are not satisfied, the count k is reset into zero at a step S6. This means that the path or paths may be found before the count k reaches to N. In this case, the current search range is not expanded and a normal search operation is carried out, namely, is continued in the delay time setter 21 with the current search range unchanged, as shown at a step 12.

Let the current search range be being expanded to the first search range (see Fig. 5), as shown by the step S1 in Fig. 4. In this case, the step S1 (Yes) is followed by a step S7 while the current search range is being expanded. In this situation, the current search range, for example, is expanded at the step S1 to the first search range illustrated in Fig. 5 during expanding the current search range. The search operation is repeatedly carried out within the first search range and is counted by the counter. When no active path is found during the search operation, a count j of the counter is counted up to j+1 at a step S8. While the count j reaches to a predetermined backward protection stage number, namely, when no active path is found the count j is counted to the backward protection predetermined times (the step S9: Yes), the count j is reset to 0 at a step S10. The step S10 is followed by the step S5 at which the search range is expanded. While the count j is not reached to the backward protection stage number during the search operation (step S9: No), the usual search operation is carried out at the step S12 without expanding the search range.

On the other hand, any active path or paths are detected at the step S7, the expansion of the search range is finished at a step S11 and the counts j and k are reset to zero. After the counts k and j are reset into zero, the step 12 is carried out at the step S11 so as to carry out the normal search operation without any change of the search range.

As mentioned before, when any active path or paths are not detected at the judgement carried out at the step S7, the step S8 is carried out after the step S7. At the step S8, the count j of counting the search number of times is counted by the counter and is counted up by one each time when the search is carried out. Thus, the count j is counted up to j + 1 at the step S8.

While the search range is being expanded and no active path is present during the expansion of the search range, the count j of the counter is counted up one by one at the step S8 predetermined times (namely, the backward protection stage numbers). In other words, when the count j of the counter is equal to the backward protection stage number, the count j is reset into zero at a step S10 that is thereafter followed by the step S5 so as to expand the search range. This shows that, when the count j is coincident with the backward protection stage number with any active path not found, the search range is expanded because no active path is found within the search range (step S5). Thereafter, the search operation is executed within an expanded search range ( for example, the second search range) the backward protection stage times.

While no active path is detected during expanding the search range (shown at the stage S7: No) and the count j of the counter for counting the search times does not reach the predetermined number (namely, the backward protection stage number) (as shown at the step S9: No), the searcher keeps the search range unchanged.

Furthermore, when no active path is found within the expanded search range, the search range is successively expanded to the maximum delay range (MDR).

While this invention has thus far been described in conjunction with a preferred embodiment thereof, it will be readily possible for those skilled in the art to put this invention into practice in various other manners. At any rate, this invention is capable of quickly recapturing a path at a high speed at a low possibility of detecting an invalid or wrong path even when any paths are lost or extinct due to shadowing or the like. Such recapturing operation can be accomplished by expanding the search range step by step in the above-mentioned manner and can be effectively executed.

## Claims

1. A CDMA receiver operable in response to a spread spectrum signal subjected to spread spectrum modulation, comprising:
a searcher for searching a communication path by detecting a correlation between the spread spectrum signal and a spread code generated by the CDMA receiver;
the searcher comprising:
detecting means for detecting whether or not the communication path is lost; and
search range expanding means for expanding a search range from a predetermined search range to a maximum search range through an intermediate search one that is wider than the predetermined search range and ant that is narrower than the maximum search range.

2. A searcher for use in a CDMA receiver operable in response to a reception spread spectrum signal, comprising:
a spread code generator for generating a spread code;
a delay unit for delaying the spread code to produce a plurality of delayed spread codes with different delay times;
a correlator section, responsive to a reception spread spectrum signal and the plurality of the delayed spread codes given from the delay unit, for calculating each correlation between the reception spread spectrum signal and each delayed spread codes to obtain correlation values representative of the above-mentioned correlation, to detect a maximum one of the correlation values, and to produce a correlation output signal representative of a result of the detection;
a path processing unit for processing the correlation output signal to produce a communication path candidate;
a search range setting unit, responsive to the communication path candidate, for setting a search range so as to expand the search range, step by step, from a predetermined search range to a maximum search range through an intermediate search one that is wider than the predetermined search range and ant that is narrower than the maximum search range, to determine the search range, when any communication path is not detected by the path processing unit; and
a delay time setter for setting the delay times to the delay unit on the basis of the search range determined by the search range expanding unit.

3. A searcher as claimed in claim 2, wherein, when the communication path is lost, the search range expanding unit widens the search range step by step from a previous one of the search ranges to the maximum search range by expanding the previous one of the search ranges on at least one of front and rear sides of the previous search range.

4. A searcher as claimed in claim 2, wherein the search range setting unit judges that the communication path candidate is lost when no communication candidate path is detected within a current one of the search ranges or when no communication candidate path to repeatedly appear at the same time position plural times is continuously detected a predetermined number of times.

5. A searcher as claimed in claim 4, wherein the search range expanding unit judges the communication candidate path as an active path when the communication candidate path repeatedly appears within the current one of the search ranges at the same time position the predetermined times.

6. A searcher as claimed in claim 5, wherein the search range expanding unit stops expanding the current one of the search ranges when the active path is present within the current one of the search ranges while the search range expanding unit expands the current one of the search ranges when the active path does not continuously appear the predetermined times.

7. A path recapturing method of recapturing a communication path in a CDMA receiver which has a searcher, comprising the steps of:
detecting correlation between a reception spread spectrum signal and a plurality of spread codes with different delay times by the use of a plurality of correlators to produce correlation output signals;
searching the path with reference to the correlation output signals by stepwise expanding a search range from a current search range to a maximum one through an intermediate search range, when the communication path is not detected, so as to recapture a path.

8. A path recapturing method as claimed in claim 7, wherein the searching step comprises the step of:
stepwise adding, to the search range, a front side and/or a rear side of the search range by a predetermined range width, when the .

9. A path recapturing method as claimed in claim 7, wherein the searching step comprises the step of:
detecting that no communication path is present within the current search range or that none of the communication path continuously appears at the same delay time position a predetermined number of times; and
judging that no communication is present within the current search range.

10. A path recapturing method as claimed in claim 7, wherein the searching step comprises the steps of:
detecting whether or not a communication path continuously appear at the same delay time position for a predetermined duration within the search range; and
judging that the communication path is active on the above-mentioned continuous appearance of the communication path.

11. A path recapturing method as claimed in claim 7, wherein the searching step comprising the steps of:
expanding the searching range when an active path is present during expansion of the search range;
finishing the expansion of the search range on presence of the active path;
counting the number of search operation times; and
expanding the search range when the number of search operation times reaches a predetermined number of times without detection of any active path.

12. A path recapturing method of recapturing a communication path in a CDMA receiver which has a searcher, comprising the steps of:
receiving a reception spread spectrum signal and a plurality of spread codes having different delay times by the searcher;
detecting, within a search range, absence of any communication path when no communication path is detected or when no communication path continuously appears at the same delay time position a predetermined number of times;
stepwise expanding the search range on a front side and a rear side of the search range by a predetermined width to a maximum delay range through an intermediate delay range on detection of the absence of any communication path;
judging during expansion of the search range that a communication path is active when a communication path continuously appears at the same delay position for a preselected number of times within the search range; and
finishing the expansion of the search range when an active path is detected during the expansion of the search range; and
carrying out a usual search without any expansion of the search range in the presence of the active path.

13. A path recapturing method as claimed in claim 12, wherein the stepwise expanding step comprises the step of:
expanding the search range when the search operation times is repeated the preselected number of times without detecting the active communication path.
